# EUROPÄISCHE PATENTANMELDUNG

(11) **EP 0 638 709 A1**
(43) Veröffentlichungstag der Anmeldung: **15.02.1995**
(21) Anmeldenummer: 94108813.0
(22) Anmeldetag: 08.06.1994
(51) Int. Cl.: F01N 3/20, F16K 17/38

(54) **Abgasanlage für Brennkraftmaschinen**

(30) Priorität: 06.08.1993 DE 4326528; 23.02.1994 DE 4405706
(71) Anmelder: Bayerische Motoren Werke Aktiengesellschaft, 80788 München (DE)
(72) Erfinder: Fischer, Adolf, D-85540 Haar (DE)

(57) **Zusammenfassung**

Für eine Abgasanlage von Brennkraftmaschinen mit einer in einem Abschnitt der Abgasleitung (2) angeordneten Abgasreinigungs-Vorrichtung (3) wird zur Erzielung einer im Aufbau einfachen, ein Signal auslösenden Schutzeinrichtung (4) vorgeschlagen, daß die Abgasleitung (2) stromauf der Abgasreinigungs-Vorrichtung (3) eine Wanddurchbrechung (5) mit einer temperaturabhängig abwerfbaren Abdeckung (6) als Schutzeinrichtung (4) aufweist. Die Abdeckung (6) ist in der Wanddurchbrechung (5) bzw. in einem Gewindering (17) werkstoffschlüssig mittels eines zwischen ca. 820°C und 910°C schmelzenden Werkstoffes gehalten.

## Beschreibung

Die Erfindung geht gemäß dem Oberbegriff des Patentanspruches 1 von der EP-A 0 378 797 aus.

Bevorzugte Vorrichtungen zur Reinigung des Abgases von Brennkraftmaschinen auf Fahrzeugen umfassen auf einem Träger angeordnete katalytisch wirkende Substanzen. Die Standfestigkeit bekannter Träger der allgemein als Katalysatoren bezeichneten Abgasreinigungs-Vorrichtungen gegenüber hohen Abgastemperaturen ist begrenzt, wobei diese Träger bei Überbelastung einer Gestaltänderung unterliegen, die einen erhöhten Strömungswiderstand zur Folge hat. Ein damit verbundener erhöhter Abgasgegendruck vermindert die Leistung und steigert den Verbrauch der Brennkraftmaschine. Weiter wirken sich die hohen Abgastemperaturen bei erhöhtem Abgasgegendruck infolge eines reduzierten Abgas-Durchsatzes durch den Träger bzw. den Katalysator auch nachteilig auf mit der Abgasanlage in Verbindung stehende Einrichtungen aus.

Aus der gattungsbildenden EP-A 0 378 796 ist eine Abgasreinigungs-Vorrichtung für ein Abgassystem eines Kraftfahrzeuges bekannt, bei der eine aus einem Bimetall gebildete Strömungsleitklappe in der Vorrichtung zum Schutz vor einer Temperatur-Überbelastung des Katalysators bzw. des Trägers parallel zu diesen einen Bypass freigibt bei Erreichen einer schädlichen Temperatur.

Eine die Zuströmung zu einem Katalysator temperaturabhängig gesteuert versperrende Abdeckung ist ferner aus der DE-A 38 26 364 bekannt. Weiter ist aus der DE-A 41 13 293 eine Abgasanlage mit einer eine Abgasreinigungs-Vorrichtung umgehenden Bypass-Leitung bekannt, die stromauf eines Katalysators mit der Abgasleitung über eine Durchbrechung in Strömungsverbindung steht, wobei zur Abdeckung der Durchbrechung ein temperaturabhängig gesteuertes Ventil dient.

Die bekannten Schutzeinrichtungen mit temperaturabhängig gesteuerten Abdeckungen zur zumindest teilweisen Umgehung des Katalysators sind platz- und bauaufwendig.

Aus der DE-C 275 363 ist eine Vorrichtung gegen Überhitzen einer Brennkraftmaschine bekannt, wobei eine bei Erreichen einer vorbestimmten Temperatur wirksame Schmelzsicherung in einem Stromkreis einer Alarmeinrichtung eine Leitungsverbindung herstellt.

Weiter ist aus SU-A 781 378 eine an einer Abgasleitung installierte Signalvorrichtung bekannt mit einer Signalpfeife, die eine in der Leitungswandung temperaturgesteuerte Blasöffnung umfaßt.

Die bekannte Alarmeinrichtung ist aufwendig und der bekannten Signalvorrichtung fehlt eine Schutzfunktion.

Der Erfindung liegt die Aufgabe zugrunde, eine gattungsgemäß gestaltete Abgasanlage mit einer im Aufbau einfachen und Einbauraum sparenden Schutzeinrichtung auszurüsten, die mit dem Eintritt der Schutzfunktion auch ein Signal abgibt.

Diese Aufgabe wird gemäß dem Kennzeichenmerkmal des Patentanspruches 1 dadurch gelöst, daß die Abgasleitung stromauf der Abgasreinigungs-Vorrichtung eine Wanddurchbrechung mit einer temperaturabhängig abwerfbaren Abdeckung als Schutzeinrichtung aufweist.

Der Vorteil der Erfindung ist eine bei geringstem Einbauraum im Aufbau besonders einfache Schutzeinrichtung, die mit dem Eintritt der Schutzfunktion durch Abwerfen der Abdeckung einen Bypass in die freie Umgebung bildet und damit verbunden ein akustisches Signal liefert.

Der besonders einfache Aufbau der erfindungsgemäßen Schutzeinrichtung kennzeichnet sich in vorteilhafter Ausgestaltung durch eine Art Schmelzsicherung dadurch, daß die Abdeckung in der Wanddurchbrechung werkstoffschlüssig mittels eines zwischen ca. 820°C und 910°C schmelzenden Werkstoffes gehalten ist.

Zur einfachen Positionierung der Abdeckung relativ zur Wanddurchbrechung einerseits und zur Einhaltung einer etwa querschnittsgleichen werkstoffschlüssigen Verbindung andererseits weist in weiterer Ausgestaltung der Erfindung zumindest die Wanddurchbrechung einen von der Abgasleitung weggerichtet sich trichterartig erweiternden Rand auf. Gemäß einem weiteren Vorschlag weisen eine bevorzugt länglich ovale Wanddurchbrechung und eine entsprechend scheibenartige Abdeckung im wesentlichen korrespondierende Trichter-Ränder auf, die in erfindungsgemäßer Fortbildung mittels unterschiedlicher Neigungen zueinander einen umlaufenden, nach außen offenen Keilspalt bilden zur deckelnahen Anordnung eines bei ca. 880° - 890°C schmelzenden Hartlotes. Mit der bevorzugten deckelnahen Verlötung der Abdeckung wird wenig Hartlot benötigt, dessen Menge bei Annäherung der Abgastemperatur an die den Träger bzw. Katalysator schädigende Temperatur rasch schmilzt. Die Abdeckung wird dadurch rasch aus der Wanddurchbrechung mit Unterstützung des Abgasdruckes ausgeblasen bzw. abgeworfen zur Freigabe eines Bypasses in die freie Umgebung.

Vorgeschlagen wird ferner, daS der Wanddurchbrechung zum einen eine die bei schmelzendem Lot sich lösende Abdeckung aufnehmende, gasdurchlässige Fangeinrichtung zugeordnet ist, und zum anderen ein jenseits der Fangeinrichtung zugeordnetes Abgas-Leitelement. Dieses Leitelement kann die über den Bypass der freigegebenen Wanddurchbrechung in die freie Umgebung austretenden Abgase in Richtung der Abgasleitung lenken.

Eine besonders vorteilhafte Anwendung der erfindungsgemäß einfachen, platzsparenden Schutzeinrichtung mit der die Wanddurchbrechung temperaturabhängig freigebenden Abdeckung ergibt sich bei einer Abgasanlage mit einem ventilgesteuerten System zur Sekundärluft-Einblasung. Mit der kostengünstig in die Abgasleitung integrierbaren Schutzeinrichtung können relativ aufwendige Ventile in dem Einblase-System sicher geschützt und damit auch gegebene System-Einrichtungen ohne Austausch gegen kostenträchtigere Ausführungen beibehalten werden.

Die Erfindung ist anhand von in der Zeichnung dargestellten Ausführungsbeispielen beschrieben. Es zeigt
- Figur 1: eine Abgasanlage mit einer ersten Schutzeinrichtung mit in einen trichterförmigen Lotrand eingesetzter Abdeckung,
- Figur 2: eine zweite Schutzeinrichtung mit einer einen abstehenden Rand der Wanddurchbrechung aufnehmenden Abdeckung, und
- Figur 3: eine dritte Schutzeinrichtung mit einer in einem lösbaren Gewindering eingelöteten Abdeckung.

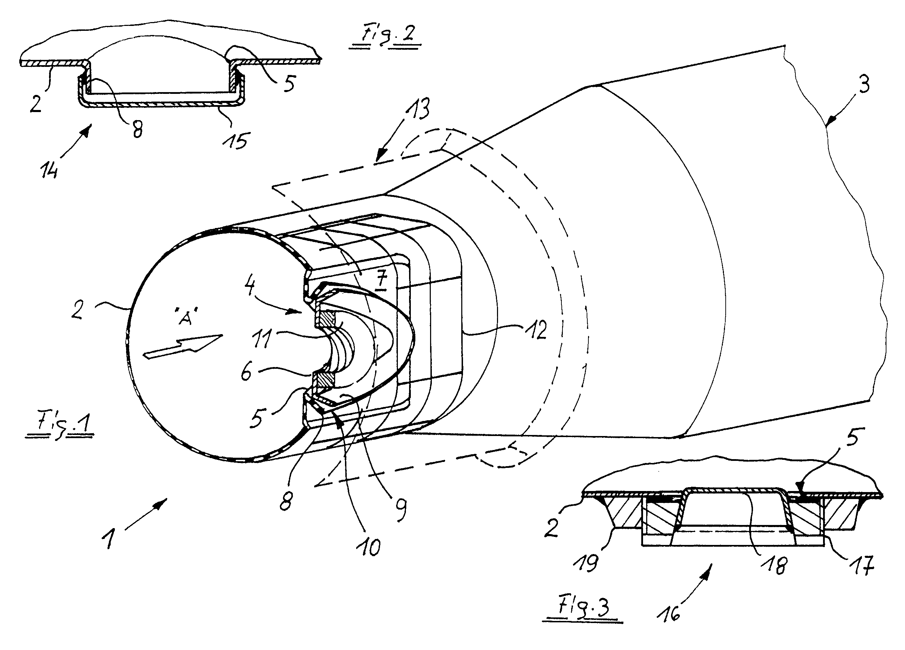

Eine lediglich abschnittsweise in Figur 1 dargestellte Abgasanlage l einer nicht gezeigten Brennkraftmaschine umfaßt in einem Abschnitt einer Abgasleitung 2 eine Abgasreinigungs-Vorrichtung 3 mit einem nicht dargestellten Katalysator bzw. mit einem Träger für katalytisch wirkende Substanzen. Zum Schutz der Abgasreinigungs-Vorrichtung 3 vor schädlichen Abgastemperaturen ist eine Schutzeinrichtung 4 vorgesehen. Die Schutzeinrichtung 4 weist stromauf der Abgasreinigungs-Vorrichtung 3 in der Abgasleitung 2 eine Wanddurchbrechung 5 mit einer temperaturabhängig abwerfbaren Abdeckung 6 auf.

Die in einer flachen Andrückung 7 der Abgasleitung 2 angeordnete Wanddurchbrechung 5 ist von länglich ovalem Querschnitt und weist einen von der Abgasleitung 2 weggerichtet sich trichterartig erweiternden Rand 8 auf. Der länglich ovalen Wanddurchbrechung 5 ist eine entsprechend scheibenartige Abdeckung 6 zugeordnet, die in ihren Abmessungen so bemessen sein kann, daß sie nahe der Wanddurchbrechung 5 auf deren Rand 8 aufliegt. Die Abdeckung 6 ist mit einem trichterartigen Rand 9 ausgerüstet, dessen Neigung von der des Randes 8 der Wanddurchbrechung 5 verschieden ist, um einen nach außen offenen, umlaufenden Keilspalt 10 zu bilden. Der offene Keilspalt 10 dient der deckelnahen Ausbildung einer werkstoffschlüssigen Verbindung der Abdeckung 6 mit dem Rand 8 der Wanddurchbrechung 5, wobei als Werkstoff für die werkstoffschlüssige Verbindung ein bei ca. 880° - 890°C schmelzendes Hartlot dient. Bei Erreichen dieser Temperatur im Fahrzeugbetrieb wird über das schmelzende Lot die Verbindung der Abdeckung 6 mit der Abgasleitung 2 gelöst, so daß die Abdeckung 6 durch ihr Eigengewicht und/oder durch den Abgasdruck aus der Wanddurchbrechung 5 abgeworfen wird zur Freigabe eines Bypasses in die freie Umgebung für das gemäß dem Pfeil A in der Abgasleitung 2 strömende Abgas.

Die Abdeckung 6 kann weiter mit einer Aufnahme 11 für eine nicht gezeigte Messeinrichtung ausgerüstet sein.

Wie aus der Figur 1 weiter hervorgeht, ist der Wanddurchbrechung 5 eine die bei schmelzendem Hartlot sich lösende Abdeckung 6 aufnehmende, gasdurchlässige Fangeinrichtung 12 zugeordnet, die vorzugsweise korbartig gestaltet ist. Weiter ist jenseits der Fangeinrichtung 12 ein durch gestrichelte Linien angedeutetes Abgas-Leitelement 13 vorgesehen, das die über die Wanddurchbrechung 5 austretenden Abgase in Richtung der Abgasleitung 2 lenkt.

Mit dem Austritt der Abgase über die Wanddurchbrechung 5 in die freie Umgebung ist ein akustisches Signal gegeben.

Eine bevorzugte Anwendung der erfindungsgemäß einfachen, platzsparenden Schutzeinrichtung 4 mit der die Wanddurchbrechung 5 temperaturabhängig freigebenden Abdeckung 6 ergibt sich bei einer Abgasanlage 1 mit einem ventilgesteuerten System zur Sekundärluft-Einblasung (nicht dargestellt). Mit der kostengünstig in die Abgasleitung 2 integrierbaren Schutzeinrichtung 4 können relativ aufwendige Ventile in dem Einblase-System sicher geschützt und damit auch gegebene System-Einrichtungen ohne Austausch gegen kostenträchtigere Ausführungen beibehalten werden.

Eine weitere, einfach gestaltete Schutzeinrichtung 14 zeigt Figur 2. Diese umfaßt eine topfartig gestaltete Abdeckung 15, die gegenüber dem Beispiel nach Figur 1 mit dem Rand 8 der Wanddurchbrechung 5 der Abgasleitung 2 außenumfänglich verlötet ist.

Schließlich zeigt Figur 3 eine für den Reparaturfall vorteilhafte Schutzeinrichtung 16. Diese umfaßt eine in einem Gewindering 17 verlötet angeordnete Abdeckung 18, wobei der Gewindering 17 in einen der Wanddurchbrechung 5 der Abgasleitung 2 zugeordneten Gewindestutzen 19 einschraubbar ist. Bei gemäß der Schutzfunktion abgeworfener Abdeckung 18 kann die Wanddurchbrechung 5 leicht durch einen anderen, komplett mit einer Abdeckung 18 ausgerüsteten Gewindering 17 wieder verschlossen werden.

Neben einer den Verlust der abgeworfenen Abdeckung 6, 15 oder 18 verhindernden Fangeinrichtung 12 gemäß Figur 1 kann jede der Abdeckungen 6, 15, 18 auch durch ein die jeweilige Abdeckung an der Abgasleitung 2 beweglich haltendes Mittel vor Verlust gesichert sein.

## Patentansprüche

1. Abgasanlage für Brennkraftmaschinen,
- umfassend eine in einem Abschnitt einer Abgasleitung (2) angeordnete Abgasreinigungs-Vorrichtung (3) mit einem temperaturabhängig steuerbaren Bypass als Schutzeinrichtung (4),
dadurch gekennzeichnet,
- daß die Abgasleitung (2) stromauf der Abgasreinigungs-Vorrichtung (3) eine Wanddurchbrechung (5) mit einer temperaturabhängig abwerfbaren Abdeckung (6, 15, 18) als Schutzeinrichtung (4, 14, 16) aufweist.

2. Abgasanlage nach Anspruch 1, dadurch gekennzeichnet, daß die Abdeckung (6, 15, 18) in der Wanddurchbrechung (5) bzw. in einem Gewindering (17) werkstoffschlüssig mittels eines zwischen ca. 820°C und 910°C schmelzenden Werkstoffes gehalten ist (Schmelzsicherung).

3. Abgasanlage nach Anspruch 1 und 2, dadurch gekennzeichnet, daß zumindest die Wanddurchbrechung (5) einen von der Abgasleitung (2) weggerichtet sich trichterartig erweiternden Rand (8) aufweist (Figur 1).

4. Abgasanlage nach den Ansprüchen 1 bis 3, dadurch gekennzeichnet, daß einer länglich ovalen Wanddurchbrechung (5) eine entsprechend scheibenartige Abdeckung (6) zugeordnet ist und beide im wesentlichen korrespondierende Trichter-Ränder (8, 9) aufweisen.

5. Abgasanlage nach den Ansprüchen 1 bis 4, dadurch gekennzeichnet, daß die Trichter-Ränder (8, 9) mittels unterschiedlicher Neigungen einen umlaufenden, nach außen offenen Keilspalt (10) bilden zur deckelnahen Anordnung eines bei ca. 880° - 890°C schmelzenden Hartlotes.

6. Abgasanlage nach den Ansprüchen 1 bis 5, dadurch gekennzeichnet, daS der Wanddurchbrechung (5) eine bei schmelzendem Hartlot abgeworfene Abdeckung (6, 15, 18) aufnehmende, gasdurchlässige Fangeinrichtung (12) zugeordnet ist.

7. Abgasanlage nach den Ansprüchen 1 bis 6, dadurch gekennzeichnet, daß der Wanddurchbrechung (5) jenseits der Fangeinrichtung (12) ein Abgas-Leitelement (13) zugeordnet ist.

8. Abgasanlage nach den Ansprüchen 1 bis 7, gekennzeichnet durch die Anordnung der die Wanddurchbrechung (5) temperaturabhängig freigebenden Abdeckung (6, 15, 18) in Kombination mit einem ventilgesteuerten System zur Sekundärluft-Einblasung in die Abgasanlage (1).

9. Abgasanlage nach einem oder mehreren der Ansprüche 1 bis 8, dadurch gekennzeichnet, daß eine topfartig gestaltete Abdeckung (15) außenumfänglich mit dem von der Abgasleitung (2) weggerichteten Rand (8) der Wanddurchbrechung (5) in werkstoffschlüssiger Verbindung steht (Schmelzsicherung; Figur 2).

10. Abgasanlage nach einem oder mehreren der Ansprüche 1 bis 8, dadurch gekennzeichnet,
- daß der Wanddurchbrechung (5) der Abgasleitung (2) ein Gewindestutzen (19) zugeordnet ist, der
- einer Anordnung eines eine werkstoffschlüssig gehaltene Abdeckung (18) tragenden Gewinderinges (17) dient (Figur 3).
